# FASCICULE DE BREVET EUROPEEN

(11) **EP 0 702 840 B1**
(45) Date de publication et mention de la délivrance du brevet: **11.03.1998**
(21) Numéro de dépôt: 95916699.2
(22) Date de dépôt: 03.04.1995
(51) Int. Cl.: H01B 5/10, G02B 6/44

(54) **Câble autoporteur, notamment câble de garde**
Selbsttragendes Kabel, insbesondere Erdungskabel
Self-supporting cable, particularly a grounding cable

(30) Priorité: 06.04.1994 FR 9404035
(43) Date de publication de la demande: 27.03.1996
(73) Titulaire: Compagnie Parisienne de Metallurgie, 60730 Sainte-Geneviève (FR)
(72) Inventeur: CHAPELET, Franck, Pierre, Michel, F-60000 Beauvais (FR); DILIS, Serge, Gérard, Marin, F-27110 Derangeville (FR)
(74) Mandataire: Cabinet HERRBURGER
(86) Numéro de dépôt international: FR9500422
(87) Numéro de publication internationale: WO9527989

(56) Documents cités:
- EP-A- 0 443 085

## Description

La présente invention concerne un câble à fibres optiques autoporteur notamment câble de garde, selon le préambule de la revendication principale.

Les câbles de garde sont des câbles autoporteurs installés sur les lignes aériennes à haute tension ayant principalement pour but de :
- protéger les lignes à haute tension contre les coups de foudre,
- véhiculer les courants de défauts, c'est-à-dire les courants de courts-circuits ou de déséquilibre entre les phases.

On connaît de multiples réalisations de câbles autoporteurs notamment de câbles de garde correspondant à la définition ci-dessus (EP-A-0 443 085). Dans ces câbles, le toron central se compose d'une ou plusieurs couches de fils dont le sens des pas alterne d'une couche à l'autre. Ces fils sont en acier galvanisé ou en acier revêtu d'aluminium. Autour du toron central il y a une ou plusieurs couches de fils d'aluminium ou d'alliage d'aluminium.

Selon l'état de la technique, certains des fils du toron central sont remplacés par des tubes métalliques contenant des fibres optiques.

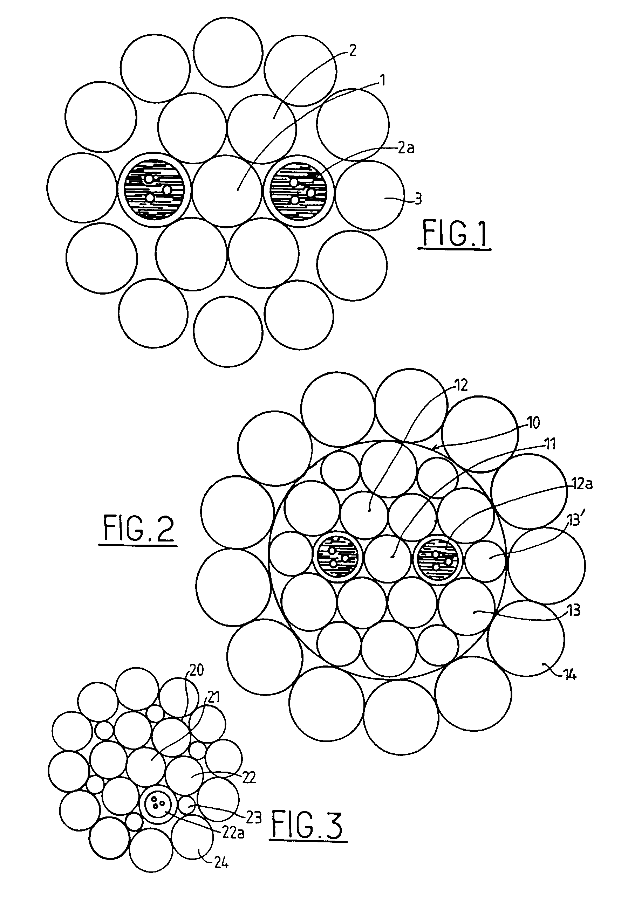

La figure 1 montre la structure d'un tel câble autoporteur connu. Ce câble se compose d'un toron central formé d'un brin central 1 entouré, dans cet exemple, d'une seule couche de fils en acier 2, 2a. Selon une technique récente, certains (2a) des fils d'acier de ce toron central sont remplacés par des tubes en inox 2a contenant une ou plusieurs fibres optiques. Enfin, l'ensemble du toron est entouré d'une couche de fils 3 d'aluminium ou d'un alliage d'aluminium (Almelec).

Le sens des hélices des couches de fils est alterné d'une couche à l'autre. Ainsi, la première et unique couche 2, 2a du toron central tourne dans un sens et les fils d'aluminium 3 formant la couche extérieure tournent dans l'autre sens.

Les câbles et notamment les câbles autoporteurs doivent être maintenus à leurs points d'attache. On utilise pour cela des pinces d'ancrage ou des pinces de suspension. Or, ces pinces qui reposent sur le principe d'un collier, enserrent le câble et provoquent des contraintes d'écrasement local qui sont transmises vers l'intérieur du câble. Comme le sens de rotation des nappes hélicoïdales de fils est alterné d'une couche à l'autre, les fils se touchent ponctuellement d'une couche à l'autre ; ces points de contact transmettent les efforts de compression créés par les pinces d'ancrage ou les pinces de suspension. Ces contraintes locales sont particulièrement gênantes pour les fibres optiques car pour qu'une fibre optique conserve ses caractéristiques, il est indispensable qu'elle soit libre en mouvement dans le tube qui la reçoit. Or, ces contraintes locales peuvent se répercuter sur les fibres optiques, les bloquer ponctuellement et interdite leur dilatation ou leur jeu, etc. Cela se traduit par des contraintes induites dans les fibres optiques qui en détériorent fortement les caractéristiques et, de plus, vieillissent prématurément les fibres optiques.

La présente invention a pour but de remédier à ces inconvénients et se propose de créer un câble autoporteur notamment un câble de garde du type défini ci-dessus, permettant de protéger les fibres optiques comme dans un câble prévu spécialement pour des fibres optiques, sans pour autant augmenter le coût de fabrication et, par suite, le coût du câble ou sans nécessiter la mise en oeuvre de moyens exceptionnels.

A cet effet l'invention concerne un câble autoporteur correspondant au type défini ci-dessus, caractérisé par les caractéristiques de la revendication principale.

Dans le câble selon l'invention, comme les différents fils constituant le câble sont tournés suivant le même sens et avec le même pas, le contact entre les fils est un contact linéaire. Tout effort d'écrasement exercé, par exemple par un dispositif de type collier, extérieurement sur le câble, se répartit donc sur une longueur importante de la ligne de contact entre deux ou plusieurs câbles excluant ainsi la création de toute contrainte locale susceptible d'être induite dans les fibres optiques. Les fibres optiques restent parfaitement libres à l'intérieur de ce câble et conservent toutes leurs caractéristiques optiques.

Selon l'invention, le toron central comprend au moins deux couches de fils, la seconde couche ou couche extérieure entourant la première couche qui contient, elle, les fibres optiques.

Il est également possible de réaliser des câbles avec un toron central composé de plus de deux couches, à la seule condition que le toron central soit de section circulaire et non pas polygonale. Cela est important car cela permet d'enrouler la couche extérieure de fils d'aluminium dans le sens opposé

La présente invention sera décrite ci-après de manière plus détaillée à l'aide des dessins annexés dans lesquels :
- la figure 1 est une vue en coupe schématique d'un câble de garde connu,
- la figure 2 est une vue en coupe analogue à celle de la figure 1 d'un câble de garde selon l'invention,
- la figure 3 est une vue en coupe d'une variante de réalisation de câble de garde selon l'invention.

Selon la figure 2, un exemple de câble selon l'invention se compose d'un toron central, cylindrique, formé d'un fil central 11 entouré d'une première couche de fils 12 dont certains fils (en général en acier) sont remplacés par des tubes 12a en inox contenant des fibres optiques. Cette première couche est entourée d'une seconde couche 13, 13' de fils de section légèrement différente, alternant dans la direction périphérique de manière à former un toron 10 cylindrique (c'est-à-dire de section circulaire). Enfin, ce toron est entouré par des fils extérieurs 14 en aluminium ou en un alliage d'aluminium.

Selon l'invention, les différents fils du toron 10 sont câblés dans le même sens de rotation et avec le même pas.

La figure 3 montre une variante du câble de la figure 2. Cette variante se distingue en ce que le toron 20 également de section circulaire, se compose d'un fil central 21 entouré par une première couche de fils 22, 22a dont certains (22a) sont des tubes en inox contenant des fibres optiques. La seconde couche est formée de fils 23 de section plus petite que celle des fils 22, 22a de manière à se loger dans les intervalles et donner à la forme extérieure du toron 20 une forme de cylindre de section circulaire. Extérieurement, il y a comme précédemment une couche de fils 24 d'aluminium ou d'un alliage d'aluminium.

Enfin, d'une manière non représentée, l'invention peut s'appliquer à un câble ayant un toron formé d'un nombre quelconque de couches dont les fils sont enroulés au même pas et dans le même sens.

L'invention, quoique appliquée de manière préférentielle à un câble de garde, est également envisageable pour d'autres applications comme les applications océanographiques, de recherche et d'exploitation pétrolière, etc.

## Revendications

1. Câble autoporteur notamment câble de garde, à fibres optiques comprenant :
- un toron central à une ou plusieurs couches de fils métalliques (1, 2),
- une ou plusieurs couches de fil métallique (3) entourant le toron central,
- le toron central incorporant des tubes métalliques contenant des fibres optiques,
caractérisé en ce que :
- le toron central (10; 20) comprend au moins deux couches de fils (12, 12a, 13, 13'; 22, 22a) de diamètre différent enroulés dans le même sens et avec le même pas, pour réaliser un contact linéaire entre les fils et former un toron cylindrique (10;20) de section circulaire,
- les tubes (12a;22a) à fibres optiques appartiennent à la première couche du toron en partant du centre du toron (10).

2. Câble selon la revendication 1, caractérisé en ce que les tubes métalliques (12a;22a) contenant les fibres optiques sont des tubes en acier inoxydable.

3. Câble selon la revendication 1, caractérisé en ce qu'il comprend au moins une couche de fils métalliques extérieurs (14; 24) en aluminium ou en un alliage d'aluminium.

## Patentansprüche

1. Selbsttragendes Kabel, insbesondere Erdungskabel, aus Lichtleitfasern, umfassend:
- eine Kernlitze aus einer oder mehreren Schichten von metallischen Drähten (1, 2),
- eine oder mehrere Schichten von metallischem Draht (3), die die Kernlitze umschließen,
- wobei in die Kernlitze metallische Röhren eingearbeitet sind, die Lichtleitfasern enthalten,
dadurch gekennzeichnet,
- daß die Kernlitze (10; 20) zumindest zwei Schichten von Drähten (12, 12a, 13, 13'; 22, 22a) unterschiedlichen Durchmessers umfaßt, die gleichsinnig und mit gleichem Schritt gewickelt sind, um einen linearen Kontakt zwischen den Drähten und eine zylindrische Litze (10; 20) mit kreisförmigem Querschnitt zu realisieren,
- wobei die Lichtleitfaserröhren (12a; 22a) zur ersten Schicht der Litze gehören und von der Mitte der Litze (10) ausgehen.

2. Kabel nach Anspruch 1, dadurch gekennzeichnet, daß die die Lichtleitfasern enthaltenden metallischen Röhren (12a; 22a) Röhren aus oxidationsfreiem Stahl sind.

3. Kabel nach Anspruch 1, dadurch gekennzeichnet, daß dieses zumindest eine Schicht von äußeren metallischen Drähten (14; 24) aus Aluminium oder einer Aluminiumlegierung umfaßt.

## Claims

1. Self-supporting fibre-optic cable, in particular an earth cable, comprising:
- a central strand having one or more layers of metal wires (1, 2),
- one or more layers of metal wire (3) surrounding the central strand,
- the central strand incorporating metal tubes containing optical fibres,
characterized in that:
- the central strand (10; 20) comprises at least two layers of wires (12, 12a, 13, 13'; 22, 22a) of different diameter, these being wound in the same direction of lay and with the same pitch, in order to produce a linear contact between the wires and to form a cylindrical strand (10; 20) of circular cross-section,
- the fibre-optic tubes (12a; 22a) belong to the first layer of the strand starting from the centre of the strand (10).

2. Cable according to Claim 1, characterized in that the metal tubes (12a; 22a) containing the optical fibres are stainless steel tubes.

3. Cable according to Claim 1, characterized in that it comprises at least one layer of external metal wires (14; 24) made of aluminium or an aluminium alloy.
